# EUROPÄISCHE PATENTSCHRIFT

(11) **EP 0 523 416 B1**
(45) Veröffentlichungstag und Bekanntmachung des Hinweises auf die Patenterteilung: **20.10.1999**
(21) Anmeldenummer: 92110698.5
(22) Anmeldetag: 25.06.1992
(51) Int. Cl.: C08F 4/642, C08F 4/02, C08F 10/06, C08F 10/00

(54) **Katalysator und Verfahren zur Herstellung von hochmolekularen Polyolefinen**
Catalyst and process for preparing high molecular weight polyolefines
Catalyseur et procédé de préparation de polyoléfines de hauts poids moléculaire

(30) Priorität: 28.06.1991 DE 4121368
(43) Veröffentlichungstag der Anmeldung: 20.01.1993
(73) Patentinhaber: TARGOR GmbH, 55116 Mainz (DE)
(72) Erfinder: Kaminsky, Walter, Prof. Dr., W-2080 Pinneberg (DE); Renner, Florian, W-2000 Hamburg 76 (DE)

(56) Entgegenhaltungen:
- EP-A- 0 206 794
- EP-A- 0 232 595
- EP-A- 0 295 312
- EP-A- 0 387 690
- EP-A- 0 399 348

## Beschreibung

Die vorliegende Erfindung bezieht sich in erster Linie auf eine geträgerte Katalysatorkomponente, die zusammen mit einem Aluminoxan als Cokatalysator für die Herstellung von hochmolekularen Polyolefinen geeignet ist.

Hochmolekulare Polyolefine (wie z.B. Polypropylen mit Mw ≥ 500 000) eignen sich besonders zur Herstellung von Folien, Platten oder Großhohlkörpern wie z.B. Rohren oder Formteilen für den Automobilbau.

Von Metallocenkatalysatoren ist bekannt, daß sie Olefine zu Polyolefinen mit enger Molmassenverteilung (Mw/Mn = 2-3) und hoher Stereoregularität (isotaktische und syndiotaktische Polymere) polymerisieren können (EP-A 185 918). Gegenüber den Polymeren, die mit klassischen Ziegler-Katalysatoren hergestellt werden, besitzen sie jedoch mit Ausnahme des Polyethylens den Nachteil eines erniedrigten Schmelzpunktes und einer zu geringen Molmasse (Angew. Chem. Int. Ed. Engl., 29 (1990) 279; Chem. Lett. (1989) 1853).

In der EP-A 232 595 wird eine geträgerte Katalysatorkomponente beschrieben, die durch Umsetzung eines (anorganischen) Trägermaterials mit mindestens einem Metallocen und mindestens einer Übergangsmetallverbindung, die keinen Cyclopentadienylrest aufweist, erhalten wird. Diese Katalysatorkomponente wird ausschließlich für die Polymerisation oder Copolymerisation von Ethylen eingesetzt. Sie soll zu Polyethylen mit verbesserter Schüttdichte führen und gleichzeitig gewährleisten, daß die Menge an Aluminoxan als Cokatalysator gegenüber herkömmlichen Metallocenkatalysatorkomponenten verringert wird.

Die der vorliegenden Erfindung zugrunde liegende Aufgabe bestand somit darin, ein Katalysatorsystem bzw. ein Polymerisationsverfahren zu finden, das es ermöglicht, insbesondere Polypropylen oder Copolymerisate des Propylens mit hoher Molmasse und hohem Schmelzpunkt herzustellen, wobei die Produkte zusätzlich hohe Stereoregularität und enge Molmassenverteilung aufweisen.

Die Erfindung betrifft eine geträgerte Katalysatorkomponente, im wesentlichen bestehend aus einem anorganischen Trägermaterial und einem Metallocen wobei Dicyclopentadienyl Zirconiumdichlorid ausgeschlossen ist.

Als anorganisches Trägermaterial dienen die Oxide der Metalle der II-IV Hauptgruppe oder der IV. Nebengruppe des Periodensystems der Elemente sowie Eisenoxide bzw. deren Mischungen. Bevorzugt sind die Oxide der Metalle Magnesium, Calcium, Aluminium, Silicium, Titan und Eisen sowie deren Mischungen. Insbesondere bevorzugt sind im Handel erhältliche Siliciumdioxide und hiervon der Typ "Silica Davison Grade 952".

Die erfindungsgemäß zu verwendenden Oxide haben bevorzugt eine BET-Oberfläche (vgl. J. Am. Chem. Soc. 60 (1938) 309) von 10-1000 m²/g, bevorzugt von 100-500 m²/g, einen Wassergehalt von 10⁻⁸-6 Gew.-%, bevorzugt kleiner 0,1 Gew.-%, und eine Korngröße zwischen 10 und 200 µm.

Vorteilhaft ist eine thermische Vorbehandlung des anorganischen Trägers im Inertgasstrom oder im Vakuum bei Temperaturen von 30-1000°C über einen Zeitraum von 1-50 Stunden.

Diese thermische Vorbehandlung erfolgt vorzugsweise in einem Fließbett unter Stickstoffatmosphäre bei Temperaturen von 200-800°C über einen Zeitraum, der der Materialmenge angepaßt ist, jedoch mindestens 2 Stunden beträgt.

Weiterhin ist es zweckmäßig, nach erfolgter Vorbehandlung in einem nachfolgenden Schritt die sorbierten Gase durch Abpumpen im Vakuum bei Temperaturen oberhalb 80°C (Zeitbedarf ca. 10 h) vom Trägermaterial zu entfernen.

Bei den erfindungsgemäß zu verwendenden Metallocenen handelt es sich bevorzugt um solche der Formel I 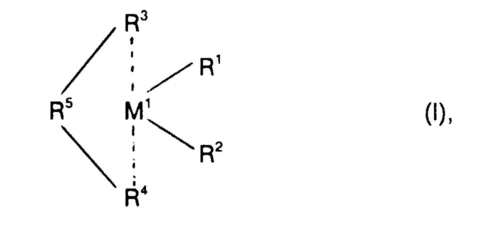 worin
- M¹: Titan, Zirkon, Vanadium, Niob oder Tantal ist,
- R¹ und R²: gleich oder verschieden sind und ein Wasserstoffatom, ein Halogenatom, eine C₁-C₁₀-Alkylgruppe, eine C₁-C₁₀-Alkoxygruppe, eine C₆-c₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe oder eine C₈-C₄₀-Arylalkenylgruppe bedeuten.
- R³ und R⁴: gleich oder verschieden sind und einen ein- oder mehrkernigen Kohlenwasserstoffrest, welcher mit dem Zentralatom M¹ eine Sandwichstruktur bilden kann, bedeuten,
- R⁵: 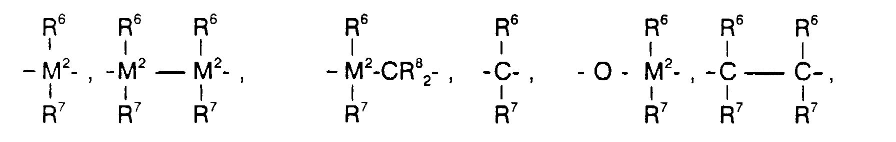 = AIR⁶, -O-, = NR⁶, = CO, = PR⁶ oder = P(O)R⁶ ist, wobei R⁶, R⁷ und R⁸ gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder R⁶ und R⁷ oder R⁶ und R⁸ jeweils mit den sie verbindenden Atomen einen Ring bilden, und
- M²: Silizium, Germanium oder Zinn ist.

In Formel I ist M¹ ein Metall aus der Gruppe Titan, Zirkon, Vanadium, Niob und Tantal, vorzugsweise Zirkon.

R¹ und R² sind gleich oder verschieden und bedeuten ein Wasserstoffatom, eine C₁-C₁₀-, vorzugsweise C₁-C₃-Alkylgruppe, eine C₁-C₁₀-, vorzugsweise C₁-C₃-Alkoxygruppe, eine C₆-C₁₀-, vorzugsweise C₆-C₈-Arylgruppe, eine C₆-C₁₀-, vorzugsweise C₆-C₈-Aryloxygruppe, eine C₂-C₁₀-, vorzugsweise C₂-C₄-Alkenylgruppe, eine C₇-C₄₀-, vorzugsweise C₇-C₁₀-Arylalkylgruppe, eine C₇-C₄₀-, vorzugsweise C₇-C₁₂-Alkylarylgruppe, eine C₈-C₄₀-, vorzugsweise C₈-C₁₂-Arylalkenylgruppe oder ein Halogenatom, vorzugsweise Chlor.

R⁵ ist eine ein- oder mehrgliedrige Brücke, welche die Reste R³ und R⁴ verknüpft und bedeutet 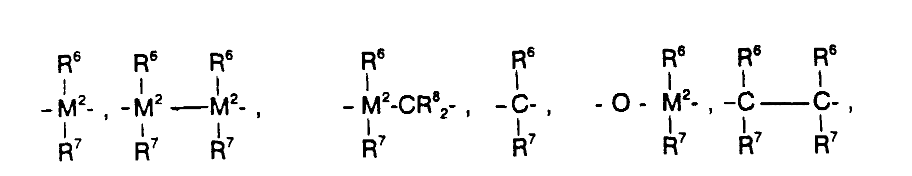 = AIR⁶, -O-, = NR⁶, = CO, = PR⁶ oder = P(O)R⁶, wobei R⁶, R⁷ und R⁸ gleich oder verschieden sind und ein Wasserstoffatom, ein Halogenatom, vorzugsweise Chlor, eine C₁-C₁₀-, vorzugsweise C₁-C₃-Alkylgruppe, insbesondere Methylgruppe, eine C₁-C₁₀-Fluoralkylgruppe, vorzugsweise CF₃-Gruppe, eine C₆-C₁₀-Fluorarylgruppe, vorzugsweise Pentafluorphenylgruppe, eine C₆-C₁₀-, vorzugsweise C₆-C₈-Arylgruppe, eine C₁-C₁₀-, vorzugsweise C₁-C₄-Alkoxygruppe, insbesondere Methoxygruppe, eine C₂-C₁₀-, vorzugsweise C₂-C₄-Alkenylgruppe, eine C₇-C₄₀-, vorzugsweise C₇-C₁₀-Arylalkylgruppe, eine C₈-C₄₀-, vorzugsweise C₈-C₁₂-Arylalkenylgruppe oder eine C₇-C₄₀-, vorzugsweise C₇-C₁₂-Alkylarylgruppe bedeuten, oder R⁶ und R⁷ oder R⁶ und R⁸ bilden jeweils zusammen mit den sie verbindenden Atomen einen Ring.

M² ist Silizium, Germanium oder Zinn, bevorzugt Silizium oder Germanium.

R⁵ ist vorzugsweise =CR⁶R⁷, = SiR⁶R⁷, -O-, = PR⁶ oder =P(O)R⁶.

Zur Herstellung syndiotaktischer Polyolefine werden solche Metallocene I eingesetzt, bei denen R³ und R⁴ verschieden sind. R³ und R⁴ bedeuten für diesen Fall bevorzugt Fluorenyl oder Cyclopentadienyl, wobei diese Grundkörper noch zusätzliche Substituenten in der Bedeutung von R¹ tragen können. Diese Substituenten können mit den sie verbindenden Atomen zusätzliche - substituierte - Ringe ausbilden.

Die Herstellung von isotaktischen Polymeren erfolgt mit Metallocenen I, bei denen R³ und R⁴ gleich oder verschieden sind. R³ und R⁴ stehen dann bevorzugt für Indenyl, Tetrahydroindenyl, Cyclopentadienyl oder Fluorenyl, wobei diese Grundkörper noch zusätzliche Substituenten in der Bedeutung von R¹ tragen können. Diese Substituenten können mit den sie verbindenden Atomen zusätzliche - substituierte - Ringe ausbilden.

Bevorzugt eingesetzte Metallocene zur Herstellung syndiotaktischer Polymere sind (Arylalkyliden)-(9-fluorenyl)(cyclopentadienyl)zirkondichlorid, (Diarylmethylen)(9-fluorenyl)(cyclopentadienyl)zirkondichlorid und (Dialkylmethylen)(9-fluorenyl) (cyclopentadienyl)-zirkondichlorid.

Besonders bevorzugt sind dabei (Methyl(phenyl)methylen)-(9-fluorenyl) (cyclopentadienyl)zirkondichlorid sowie (Diphenylmethylen) (9-fluorenyl) (cyclopentadienyl)-zirkondichlorid und (Dimethylmethylen) (9-fluorenyl)-(cyclopentadienyl)zirkondichlorid.

Bevorzugt eingesetzte Metallocene zur Herstellung isotaktischer Polyolefine sind:
rac-Dimethylsilyl-bis-(1-indenyl)zirkondichlorid,
rac-Diphenylsilyl-bis-(1-indenyl)zirkondichlorid,
rac-Dimethylsilyl-bis-(tetrahydro-1-indenyl)zirkondichlorid,
rac-Diphenylsilyl-bis-(tetrahydro-1-indenyl)zirkondichlorid,
rac-Ethylen-bis-(tetrahydro-1-indenyl)zirkondichlorid und
rac-Ethylen-bis-(1-indenyl)zirkondichlorid,
rac-Dimethylsilyl-bis-(2-methyl-4,6-diisopropylindenyl)zirkondichlorid,
rac-Dimethylsilyl-bis-(2,4,6-trimethylindenyl)zirkondichlorid oder
rac-Dimethylsilyl-bis-(2-methyl-4,5-benzoindenyl)zirkondichlorid.

Auch unverbrückte Metallocene wie z.B. (Cyclopentadienyl)₂ZrCl₂ können nach dem erfindungsgemäßen Verfahren in eine geträgerte Katalysatorkomponente überführt werden, die insbesondere zur Herstellung hochmolekularer ataktischer Polyolefine oder hochmolekularem Polyethylen geeignet ist.

Die genannten Metallocene I sind bekannt und Verfahren zu ihrer Herstellung in der Literatur beschrieben (vgl. J. Organomet. Chem. 288 (1985) 63-67 und EP-A 320 762, EP-A 336 127, EP-A 387 690, EP-A 302 424).

Die Umsetzung des Metallocens der Formel (I) mit dem vorbehandelten anorganischen Trägermaterial erfolgt durch intensives Verrühren unter Inertgas in einem Lösungsmittel, welches aromatisch, aliphatisch bzw. zusätzlich halogeniert sein kann, indem bei Temperaturen von -30°C - 120°C das vorbehandelte Trägermaterial als Feststoff oder Suspension vorgelegt bzw. zu einer Lösung des zu trägernden Metallocens zudosiert wird. Als Beispiele für geeignete Lösungsmittel seien Toluol, Dichlormethan und Hexan genannt, in welchen das Metallocen in einem Verhältnis von 1•10⁻⁶ bis 5•10⁻² mol M¹/g Träger, bevorzugt 1•10⁻⁵ bis 1•10⁻³ mol M¹/g Träger zur Umsetzung gebracht wird. Die Metallocenkonzentration im Lösungsmittel liegt zwischen 0,1 und 10⁻⁶ mol/l, bevorzugt zwischen 0,01 und 10⁻⁵ mol/l, wobei ein Teil der metallorganischen Verbindung auch ungelöst als Suspension vorliegen kann.
Die Dauer der Umsetzung liegt zwischen 15 min und 48 h, bevorzugt zwischen 1 h und 20 h.

Dieses Verfahren zeichnet sich aus durch einen hohen Grad der Fixierung des Metallocens auf dem verwendeten Träger.

Es ist vorteilhaft, zur Entfernung geringer anhaftender Restmengen von nicht fixiertem Metallocen die so hergestellte Katalysatorkomponente unter Inertbedingungen mit einem geeigneten Lösungsmittel wie z.B. wasserfreiem und sauerstoffreiem Toluol zu waschen, wobei zur Vermeidung großer Lösungsmittelmengen in einem Extraktor (z.B. nach Soxhlet) gearbeitet werden kann.

Als Cokatalysator beim erfindungsgemäßen Verfahren zur Herstellung von hochmolekularen Polyolefinen wird ein Aluminoxan der Formel II 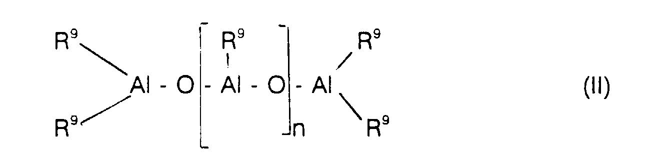 für den linearen Typ und/oder der Formel III 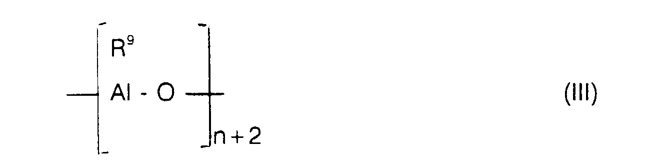 für den cyclischen Typ, wobei in den Formeln II und III die Reste R⁹ gleich oder verschieden sein können und eine C₁-C₆-Alkylgruppe, eine C₁-C₆-Fluoralkylgruppe, eine C₆-C₁₈-Arylgruppe, eine C₆-C₁₈-Fluorarylgruppe oder Wasserstoff bedeuten und n eine ganze Zahl von 2 bis 50 ist, verwendet. Bevorzugt ist n eine ganze Zahl von 10-35.

Bevorzugt sind die Reste R⁹ gleich und bedeuten Methyl, Isobutyl, Phenyl oder Benzyl, besonders bevorzugt Methyl.

Sind die Reste R⁹ unterschiedlich, so sind sie bevorzugt Methyl und Wasserstoff oder alternativ Methyl und Isobutyl, wobei Wasserstoff bzw. Isobutyl bevorzugt zu 0,01-40 % (Zahl der Reste R⁹) enthalten sind.

Statt des Aluminoxans kann auch eine Mischung bestehend aus Aluminoxan und AIR⁹₃ verwendet werden. Das Aluminoxan kann auf verschiedene Arten nach bekannten Verfahren hergestellt werden. Eine der Methoden ist beispielsweise, daß eine Aluminiumkohlenwasserstoffverbindung und/oder eine Hydridoaluminiumkohlenwasserstoffverbindung mit Wasser (gasförmig, fest, flüssig oder gebunden - beispielsweise als Kristallwasser) in einem inerten Lösungsmittel (wie z.B. Toluol) umgesetzt wird. Zur Herstellung eines Aluminoxans mit verschiedenen Alkylgruppen R⁹ werden entsprechend der gewünschten Zusammensetzung zwei verschiedene Aluminiumtrialkyle (AIR₃ + AIR'₃) mit Wasser umgesetzt (vgl. S. Pasynkiewicz, Polyhedron 9 (1990) 429 und EP-A 302 424).

Die genaue Struktur der Aluminoxane II und III ist nicht bekannt.

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Es ist möglich, die geträgerte Katalysatorkomponente vor dem Einsatz in der Polymerisationsreaktion mit einem Aluminoxan der Formel (II) und/oder (III) vorzuaktivierten. Dadurch wird die Polymerisationskativität deutlich erhöht und die Kornmorphologie verbessert. Dabei wird bevorzugt der geträgerte Katalysator als Feststoff zu einer Lösung eines Aluminoxans in einem inerten Kohlenwasserstoff gegeben. Als inerter Kohlenwasserstoff eignet sich ein aliphatischer oder aromatischer Kohlenwasserstoff. Bevorzugt wird Toluol oder ein C₆-C₁₀-Kohlenwasserstoff verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösung. Die Metallocene können in der gleichen (Werte sind ohne Träger zu verstehen) Konzentration eingesetzt werden, vorzugsweise werden sie jedoch in einer Menge von 10⁻⁴ -1 mol pro mol Aluminoxan eingesetzt. Die Voraktivierungszeit beträgt 5 Minuten bis 60 Stunden, vorzugsweise 5 bis 60 Minuten. Man arbeitet bei einer Temperatur von -78°C bis 100°C, vorzugsweise 0 bis 70°C.

Eine weitere mögliche Ausgestaltung des erfindungsgemäßen Verfahrens besteht darin, daß man an Stelle oder neben eines Aluminoxans eine salzartige Verbindung der Formel RₓNH₄₋ₓBR'₄ oder der Formel R₃PHBR'₄ als Cokatalysator verwendet. Dabei sind x = 1, 2 oder 3, R = Alkyl oder Aryl, gleich oder verschieden, und R' = Aryl, das auch fluoriert oder teilfluoriert sein kann. In diesem Fall besteht der Katalysator aus dem Reaktionsprodukt des geträgerten Metallocens mit einer der genannten Verbindungen (vgl. EP-A 277 004).

Die vorliegende Erfindung betrifft somit auch ein Verfahren zur Herstellung von hochmolekularen Polyolefinen durch Polymerisation oder Copolymerisation eines Olefins der Formel R^{a}CH = CHR^{b}, worin R^{a} und R^{b} gleich oder verschieden sind und ein Wasserstoffatom oder einen Alkylrest mit 1 bis 14 C-Atomen bedeuten, oder R^{a} und R^{b} mit den sie verbindenden Atomen einen Ring bilden können, bei einer Temperatur von -60 bis 200°C, bei einem Druck von 0,5 bis 100 bar, in Lösung, in Suspension oder in der Gasphase, in Gegenwart eines Katalysators, welcher aus einer Übergangsmetallkomponente (Metallocen) und einem Aluminoxan besteht, dadurch gekennzeichnet, daß es sich bei der Übergangsmetallkomponente um das oben beschriebene geträgerte Metallocen I handelt.

Die Polymerisation oder Copolymerisation wird in bekannter Weise in Lösung, in Suspension oder in der Gasphase, kontinuierlich oder diskontinuierlich, ein- oder mehrstufig bei einer Temperatur von -60 bis 200°C, vorzugsweise 20 bis 80°C, durchgeführt. Polymerisiert oder copolymerisiert werden Olefine der Formel R^{a}-CH=CH-R^{b}. In dieser Formel sind R^{a} und R^{b} gleich oder verschieden und bedeuten ein Wasserstoffatom oder einen Alkylrest mit 1 bis 14 C-Atomen. R^{a} und R^{b} können jedoch auch mit den sie verbindenden C-Atomen einen Ring bilden. Beispiele für solche Olefine sind Ethylen, Propylen, 1-Buten, 1-Hexen, 4-Methyl-1-penten, 1-Octen, Norbornen oder Norbornadien. Insbesondere werden Propylen und Ethylen polymerisiert.

Als Molmassenregler wird, falls erforderlich, Wasserstoff zugegeben. Der Gesamtdruck im Polymerisationssystem beträgt 0,5 bis 100 bar. Bevorzugt ist die Polymerisation in dem technisch besonders interessanten Druckbereich von 5 bis 64 bar.

Dabei werden die Metallocene in einer Konzentration, bezogen auf das Übergangsmetall, von 10⁻³ bis 10⁻⁸, vorzugsweise 10⁻⁴ bis 10⁻⁷ mol Übergangsmetall pro dm³ Lösemittel bzw. pro dm³ Reaktorvolumen angewendet. Das Aluminoxan oder die Mischung Aluminoxan/AIR⁹₃ wird in einer Konzentration von 10⁻⁵ bis 10⁻¹ mol, vorzugsweise 10⁻⁴ bis 10⁻² mol pro dm³ Lösemittel bzw. pro dm³ Reaktorvolumen verwendet. Prinzipiell sind aber auch höhere Konzentrationen möglich.

Das erfindungsgemäße Verfahren zur Trägerung der Metallocene ermöglicht, abhängig von Art, Oberfläche und Vorbehandlung des Trägers Belegungen von 1•10⁻⁶ bis 1•10⁻² mol M¹/g Träger, bevorzugt von 1•10⁻⁵ bis 1•10⁻³ mol M¹/g Träger.

Wenn die Polymerisation als Suspensions- oder Lösungspolymerisation durchgeführt wird, wird ein für das Ziegler-Niederdruckverfahren gebräuchliches inertes Lösemittel verwendet. Beispielsweise arbeitet man in einem aliphatischen oder cycloaliphatischen Kohlenwasserstoff; als solcher sei beispielsweise Butan, Pentan, Hexan, Heptan, Decan, Isooctan, Cyclohexan, Methylcyclohexan genannt.

Weiterhin kann eine Benzin- bzw. hydrierte Dieselölfraktion benutzt werden. Brauchbar ist auch Toluol. Bevorzugt wird im flüssigen Monomeren polymerisiert.

Werden inerte Lösungsmittel verwendet, werden die Monomeren gasförmig oder flüssig zudosiert.

Die Dauer der Polymerisation ist beliebig, da das erfindungsgemäß zu verwendende Katalysatorsystem einen nur geringen zeitabhängigen Abfall der Polymerisationsaktivität zeigt.

Die erfindungsgemäße geträgerte Katalysatorkomponente ist insbesondere geeignet zur Herstellung von hochisotaktischem bzw. hochsyndiotaktischem Polypropylen mit einer engen Molekulargewichtsverteilung und von entsprechenden Copolymeren des Propylens mit Ethylen oder anderen α-Olefinen von C₄-C₁₆, wobei selbst bei hohen Polymerisationstemperaturen in den genannten Fällen noch Molmassen von über 10⁶ g/mol erreichbar sind.

Das erfindungsgemäße Polymerisationsverfahren ermöglicht damit z.B. erstmals einen allgemeinen Zugang zu engverteiltem isotaktischem bzw. syndiotaktischem Polypropylen mit Molmassen von größer 500 000 g/mol. Das so hergestellte Material hat einen Schmelzpunkt von ca. 160°C.

Das erfindungsgemäße Katalysatorsystem löst somit allgemein für eine große Breite verschiedener Metallocene das insbesondere beim Polypropylen bekannte Problem des zu niedrigen Schmelzpunkts und ermöglicht die Verwendung einfach herstellbarer Metallocene für den genannten Zweck.

### Beispiel 1 Herstellung der geträgerten Katalysatorkomponente

Als Trägermaterial wurde Silica Davison Grade 952 verwendet. Die Oberfläche des verwendeten Materials betrug nach BET-Messungen 350 m²/g, der Porendurchmesser 15 nm (aus der N₂-Desorptionskurve). Die Korngröße lag im Bereich 50-100 µm. Vor Verwendung wurde das Material 3 Stunden bei 500°C geglüht und 16 Stunden bei 100°C im Vakuum entgast.

2,7 g Silica Davison Grace 952 wurden mit 60 cm³ einer 10⁻³-molaren Lösung von Ethylenbis(indenyl)zirkoniumdichlorid in Toluol versetzt. Die Suspension wurde 16 Stunden bei 55°C gerührt. Durch anschließende 2-tägige Soxhletextraktion sollte sichergestellt werden, daß der Träger frei von homogenen Anteilen war. Nach Absaugen und Trocknen im Vakuum bis zur Gewichtskonstanz erhielt man einen schwach gelben Feststoff.

Zur Bestimmung des Zirkongehalts wurden Proben von 300 mg eingewogen, einen Tag bei 220°C in einer Mischung von 4 ml HNO₃ (65 %), 2 ml HCIO₄ (70 %) und 1 ml HF (40 %) aufgeschlossen und nach Abrauchen der Säure in 10 ml dest. H₂O aufgenommen. Die Messung erfolgte an einem Perkin Elmer ICP-OES-Spektrometer. Für Beispiel 1 ergab sich ein Zirkongehalt von 1,9 • 10⁻⁵ mol Zr/g Träger. Weitere Daten zeigt Tabelle 1.

### Beispiel 2-4

Die Trägerkatalysatoren der Beispiele 2-4 wurden analog zu Beispiel 1 hergestellt, wobei als Reaktionsbedingungen 85°C/16 Stunden (Bsp. 2), 25°C/2 Stunden (Bsp. 3) und 55°C/2 Stunden (Bsp. 4) gewählt wurden. Aufarbeitung und Charakterisierung erfolgte analog Beispiel 1. Die Änderungen gegenüber Beispiel 1 hinsichtlich eingesetzter Katalysatormenge und gefundenem Zr-Gehalt zeigt Tabelle 1.

### Beispiel 5

Als weitere Ausgangsverbindung wurde Ethylenbis(tetrahydroindenyl)zirkoniumdichlorid verwendet. In Abänderung zu den vorigen Beispielen wurde die Verbindung, die besonders bei höheren Temperaturen besser in Toluol löslich ist als das unhydrierte Zirkonocen, in Substanz zugegeben.

4,22 g Silica Davison Grade 952 und 323 mg (0,75 mmol) des Metallocens wurden in 50 ml Toluol 2 Stunden bei 70°C gerührt. Die Probe enthielt 8,4 • 10⁻⁵ mol Zr/g Träger. Weitere Daten zeigt Tabelle 1.

### Beispiel 6

Es wurde die gleiche Stöchiometrie wie bei Beispiel 5 gewählt, jedoch der Ansatz vergrößert.

14,4 g Silica Davison Grade 952 wurden mit 1,06 g (2,47 mmol) des genannten Metallocens in 175 ml Toluol 2 Stunden bei 70°C gerührt. Aufarbeitung und Charakterisierung erfolgte analog zu Beispiel 1. In ausgezeichneter Übereinstimmung mit Beispiel 5 enthielt die Probe ebenfalls 8,4 • 10⁻⁵ mol Zr/g Träger.

### Beispiel 7

315 mg Silica Davison Grade 952 wurden mit 227 mg (0,53 mmol) Ethylenbis(tetrahydroindenyl)zirkoniumdichlorid in 10 ml Toluol 16 Stunden bei 70°C gerührt. Aufarbeitung und Charakterisierung erfolgte analog zu Beispiel 1. Die Probe enthielt 4,5 • 10⁻⁴ mol Zr/g Träger.

**Tabelle 1**

| Beispiel | Eingesetzt | Gefunden | Gefunden |
|---|---|---|---|
| | mol Zr/g Träger | mol Zr/g Träger | mg Zr/g Träger |
| 1 | 2,2 • 10⁻⁵ | 1,9 • 10⁻⁵ | 1,8 |
| 2 | 2,3 • 10⁻⁵ | 2,1 • 10⁻⁵ | 2,0 |
| 3 | 3,8 • 10⁻⁵ | 3,3 • 10⁻⁵ | 3,1 |
| 4 | 5,8 • 10⁻⁵ | 5,5 • 10⁻⁵ | 5,1 |
| 5 | 1,7 • 10⁻⁴ | 8,4 • 10⁻⁵ | 7,6 |
| 6 | 1,7 • 10⁻⁴ | 8,4 • 10⁻⁵ | 7,6 |
| 7 | 1,7 • 10⁻³ | 4,5 • 10⁻⁴ | 40,7 |

### Polymerisationsbeispiele

### Beispiel 8

Ein im Vakuum ausgeheizter, mehrfach gespülter und mit einem Thermostaten auf 50°C gehaltener 1-dm³ Reaktor wurde im Argongegenstrom mit 100 ml Toluol, 600 mg Aluminoxan und 310 mg des geträgerten Metallocens von Bsp. 1 befüllt. Nach einer Vorreaktionszeit von einer Stunde unter Rühren wurden 2 bar Propen aufgepreßt. Nach einer Reaktionszeit von 16 Stunden wurde der Überdruck abgelassen und der Ansatz mit Ethanol gequencht. Zur Entfernung von Katalysatorresten wurde ein Tag in ethanolischer HCl gerührt. Nach anschließendem Trocknen wurde das Polypropylen durch Extraktion mit Dekalin bei 140°C vom Träger abgetrennt. Nach Ausfällen der heißen Dekalinlösung in Ethanol, Absaugen und Trocknen im Vakuum bei 70°C wurde silicafreies Polypropylen als weißes Material in einer Ausbeute von 2,1 g erhalten.

Das Viskositätsmittel des Molekulargewichts der Probe wurde in Dekalin (135°C) bei einer Einwaage von 15 mg in 50 ml bestimmt. Für die Auswertung wurden die Werte K = 1 • 10⁻⁴ und α = 0,8 verwendet. Es ergab sich ein viskositätsmittleres Molekulargewicht Mᵥ von 958.000. DSC-Messungen ergaben einen Schmelzpunkt von 160,1°C.

### Beispiele 9-11

Die Polymerisationen wurden analog zu Beispiel 8 durchgeführt. Die eingesetzten Katalysatormengen betrugen 587 mg (Bsp. 9), 460 mg (Bsp. 10) und 340 mg (Bsp. 11). Weitere Daten und die Charakterisierung der Produkte zeigt Tabelle 2.

### Beispiel 12

Anders als bei den bisherigen Beispielen wurde hier die heterogenisierte Form des hydrierten Zirkonocens gemäß Bsp. 5 eingesetzt. Die Polymerisation erfolgte analog zu Beispiel 8 mit 328 mg geträgerter Katalysatorkomponente. Weitere Daten und die Charakterisierung des Produktes zeigt Tabelle 2.

### Beispiel 13 und 14

Die Polymerisationen erfolgten analog zu Beispiel 8 mit 262 mg des Katalysators gemäß Bsp. 5 bei 30°C in Beispiel 13 und mit 323 mg bei 70°C in Beispiel 14. Weitere Daten und die Charakterisierung der Produkte zeigt Tabelle 2.

### Beispiel 15

Die Polymerisation erfolgte analog zu Beispiel 8. Um die Aktivität genauer bestimmen zu können, wurden 963 mg des Katalysators gemäß Bsp. 6 und 2,0 g Aluminoxan eingesetzt. Nach 2-stündiger Polymerisation bei 50°C und 2 bar Propendruck ergaben sich nach Aufarbeitung 8,7 g Produkt. Die Aktivität betrug 28,2 kg PP/mol Zr • h • bar.

### Beispiel 16

In diesem Beispiel wurde Ethen als Monomer eingesetzt. Die Polymerisation erfolgte analog zu Beispiel 8. Mit 205 mg der Katalysatorkomponente gemäß Bsp. 5 wurden in 10 Minuten bei 50°C und 4 bar Ethendruck 1,7 g Produkt erhalten.

**Tabelle 2**

| Beispiel Nr. | Kat. gem. Bsp. Nr. | T(°/C) ¹⁾ | Mᵥ (g/mol) | Smp. (°C) Produkt (PP) |
|---|---|---|---|---|
| 8 | 1 | 50 | 958 000 | 160,1 |
| 9 | 2 | 50 | 1 096 000 | 158,4 |
| 10 | 2 | 50 | 1 333 000 | 158,4 |
| 11 | 3 | 50 | 1 171 000 | 155,2 |
| 12 | 5 | 50 | 1 217 000 | 155,6 |
| 13 | 5 | 30 | 1 145 000 | 153,6 |
| 14 | 5 | 70 | 1 352 000 | 156,4 |

| | | | | |
|---|---|---|---|---|
| ¹⁾ Polymerisationstemperatur | | | | |

### Beispiel 17

Die Polymerisation erfolgte mit 582 mg Alumoxan und 986 mg der Katalysatorkomponente gemäß Bsp. 6 bei 50°C, 2 bar Propendruck und einer Polymerisationszeit von acht Stunden.

| | |
|---|---|
| Ausbeute | 2,0 g |
| Aktivität | 773 g PP/mol Zr • h • bar |
| Schmelzpunkt | 155,8°C |
| Isotaxie | 90,2 % |
| isotakt. Blocklänge | 18,4 |
| Mᵥ | 911 000 g/mol |

### Beispiel 18

Die Polymerisation erfolgte mit 566 mg Alumoxan und 246 mg der Katalysatorkomponente gemäß Bsp. 6 bei 50°C, 2 bar Propendruck und einer Polymerisationszeit von drei Stunden nach einstündiger Vorreaktion der Katalysatorkomponenten in 10 ml Toluol bei Raumtemperatur.

| | |
|---|---|
| Ausbeute | 0,37 g |
| Aktivität | 1000 g PP/mol Zr • h • bar |
| Schmelzpunkt | 158,2°C |
| Isotaxie | 96,5 % |
| isotakt. Blocklänge | 49,5 |
| Mᵥ | 921 000 g/mol |

Die Bestimmung der Isotaxie erfolgte mittels ¹³C-NMR-Spektroskopie.

### Beispiel 19

### Herstellung der geträgerten Katalysatorkomponente

4,23 g Silica Davison 952 und 300,6 mg Ethylenbis(indenyl)zirkoniumdichlorid wurden in 50 ml Toluol 16 Stunden bei 70°C gerührt. Dabei wurde nach einigen Minuten eine leichte Rotfärbung des Trägermaterials beobachtet. Nach Ende der Reaktionszeit war die überstehende Lösung fast vollständig entfärbt. Nach eintägiger Extraktion und 12 Stunden Trocknen im Vakuum bei 40°C wurde der Trägerkatalysator SiBi₆ als rötlicher Feststoff erhalten.

| | |
|---|---|
| Eingesetzte Zirkonkonzentration | 1,7 • 10⁻⁴ mol Zr/g Silica |
| Gefundene Zirkonkonzentration | 1,6 • 10⁻⁴ mol Zr/g Silica |
| Immobilisierungsgrad | 94 % |

### Polymerisationsbeispiele

### Beispiel 20

Die Polymerisation erfolgte mit 431 mg des Katalysators aus Beispiel 19 und 0,46 g Methylaluminoxan (MAO) bei 2 bar Propendruck, 50°C Polymerisationstemperatur und einer Polymerisationszeit von 2 Stunden analog zu Beispiel 8.

Die Ausbeute betrug 1,20 g, was einer Aktivität von 11,2 kg/mol [Zr] entspricht. ¹³C-NMR-Untersuchungen ergaben eine Isotaxie von 96,8 % ([mm] = 94,6). Im Vergleich zu Polypropylen, das unter ansonsten gleichen Bedingungen mit dem entsprechenden homogenen Katalysatorsystem hergestellt wurde, ist der Prozentsatz an [mm]-Triaden in dem im hier erhaltenen Produkt um 9 % höher (¹³C-NMR). Weitere Daten der Charakterisierung zeigt Tab. 3.

### Beispiel 21

Die Polymerisation erfolgte analog zu Beispiel 20 mit 237 mg des Katalysators aus Beispiel 19 und 0,35 g MAO bei 75°C Polymerisationstemperatur. DSC-Messungen des Produktes ergaben einen Schmelzpunkt von 162,2°C. Weitere Daten und die Charakterisierung zeigt Tabelle 3.

### Beispiele 22 und 23

Die Polymerisationen erfolgten analog zu Beispiel 21, wobei 319 mg und 279 mg des Katalysators aus Beispiel 19 sowie 0,36 g MAO bzw. 0,37 g eingesetzt wurden. Weitere Daten und die Charakterisierung zeigt Tabelle 3.

**Tabelle 3**

| Beispiel Nr. | Ausbeute in g | Aktivität in kg /mol [Zr] | Mᵥ [*10³] | Smp. (0°C) Produkt (PP) | [mm] in % |
|---|---|---|---|---|---|
| 20 | 1,20 | 11,2 | 518 | 159,2 | 94,6 |
| 21 | 0,51 | 7,0 | 675 | 162,1 | |
| 22 | 0,80 | 9,4 | 632 | 161,3 | |
| 23 | 0,62 | 7,0 | 758 | 162,1 | |

## Patentansprüche (Patentansprüche für folgende(n) Vertragsstaat(en): AT, BE, CH, LI, DE, FR, GB, GR, IT, NL, SE)

1. Geträgerte Katalysatorkomponente zur Olefinpolymerisation, im wesentlichen bestehend aus einem anorganischen Trägermaterial und einem Metallocen, wobei Dicyclopentadienyl Zirconium dichlorid als Metallocen ausgeschlossen ist.

2. Katalysatorkomponente nach Anspruch 1, dadurch gekennzeichnet, daß als anorganisches Trägermaterial Oxide der Metalle der II-IV Hauptgruppe, der IV. Nebengruppe des Periodensystems der Elemente oder Eisenoxide sowie deren Mischungen verwendet werden.

3. Katalysatorkomponente nach Anspruch 1 oder 2, dadurch gekennzeichnet, daß als anorganisches Trägermaterial Siliciumdioxid verwendet wird.

4. Katalysatorkomponente nach einem oder mehreren der Ansprüche 1-3, dadurch gekennzeichnet, daß als Metallocen eine Verbindung der Formel I 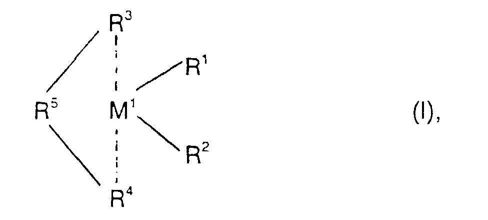 worin
M¹ Titan, Zirkon, Vanadium, Niob oder Tantal ist,
R¹ und R² gleich oder verschieden sind und ein Wasserstoffatom, ein Halogenatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe oder eine C₈-C₄₀-Arylalkenylgruppe bedeuten,
R³ und R⁴ gleich oder verschieden sind und einen ein- oder mehrkernigen Kohlenwasserstoffrest, welcher mit dem Zentralatom M¹ eine Sandwichstruktur bilden kann, bedeuten,
R⁵ 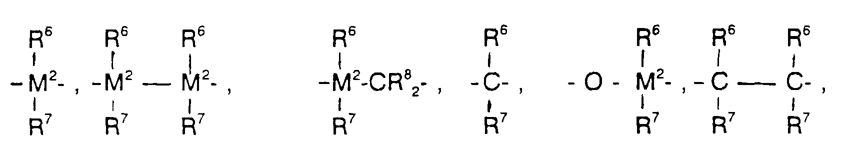 = AlR⁶, -O-, = NR⁶, = CO, = PR⁶ oder = P(O)R⁶ ist, wobei R⁶, R⁷ und R⁸ gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder R⁶ und R⁷ oder R⁶ und R⁸ jeweils mit den sie verbindenden Atomen einen Ring bilden, und
M² Silizium, Germanium oder Zinn ist, verwendet wird.

5. Katalysatorkomponente nach einem oder mehreren der Ansprüche 1-4, dadurch gekennzeichnet, daß als Metallocen (Arylalkyliden)-(9-fluorenyl) (cyclopentadienyl)zirkondichlorid, (Diarylmethylen)(9-fluorenyl) (cyclopentadienyl)zirkondichlorid oder (Dialkylmethylen)(9-fluorenyl) (cyclopentadienyl)-zirkondichlorid verwendet wird.

6. Katalysatorkomponente nach einem oder mehreren der Ansprüche 1-5, dadurch gekennzeichnet, daß als Metallocen (Methyl(phenyl)methylen)-(9-fluorenyl) (cyclopentadienyl)zirkondichlorid, (Diphenylmethylen)(9-fluorenyl) (cyclopentadienyl)-zirkondichlorid oder (Dimethylmethylen)(9-fluorenyl) (cyclopentadienyl)zirkondichlorid verwendet wird.

7. Katalysatorkomponente nach einem oder mehreren der Ansprüche 1-6, dadurch gekennzeichnet, daß als Metallocen
rac-Dimethylsilyl-bis-(1-indenyl)zirkondichlorid,
rac-Diphenylsilyl-bis-(1-indenyl)zirkondichlorid,
rac-Dimethylsilyl-bis-(tetrahydro-l-indenyl)zirkondichlorid,
rac-Diphenylsilyl-bis-(tetrahydro-1-indenyl)zirkondichlorid,
rac-Ethylen-bis-(tetrahydro-1-indenyl)zirkondichlorid oder
rac-Ethylen-bis-(1-indenyl)zirkondichlorid verwendet wird.

8. Verfahren zur Herstellung einer geträgerten Katalysatorkomponente nach einem oder mehreren der Ansprüche 1-7, dadurch gekennzeichnet, daß man das anorganische Trägermaterial in einem Lösungsmittel mit dem Metallocen umsetzt.

9. Verfahren nach Anspruch 8, dadurch gekennzeichnet, daß als Lösungsmittel Toluol verwendet wird.

10. Verfahren zur Herstellung eines hochmolekularen Polyolefins durch Polymerisation oder Copolymerisation eines Olefins der Formel R^{a}CH = CHR^{b}, worin R^{a} und R^{b} gleich oder verschieden sind und ein Wasserstoffatom oder einen Alkylrest mit 1 bis 14 C-Atomen bedeuten, oder R^{a} und R^{b} mit den sie verbindenden Atomen einen Ring bilden können, bei einer Temperatur von -60 bis 200°C, bei einem Druck von 0,5 bis 100 bar, in Lösung, in Suspension oder in der Gasphase, in Gegenwart eines Katalysators, welcher aus einer Übergangsmetallkomponente (Metallocen) und einem Aluminoxan und/oder einer salzartigen Verbindung der Formel RₓNH_{4·x}BR'₄ oder der Formel R₃PHBR'₄, worin x = 1, 2 oder 3, R gleich oder verschieden Alkyl oder Aryl und R' = Aryl, das auch fluoriert oder teilfluoriert sein kann, besteht, dadurch gekennzeichnet, daß es sich bei der Übergangsmetallkomponente um eine geträgerte Katalysatorkomponente nach einem oder mehreren der Ansprüche 1-7 handelt.

11. Verfahren nach Anspruch 10, dadurch gekennzeichnet, daß Propylen polymerisiert oder copolymerisiert wird.

## Patentansprüche (Patentansprüche für folgende(n) Vertragsstaat(en): ES)

1. Verfahren zur Herstellung einer geträgerten Katalysatorkomponente im wesentlichen bestehend aus einem anorganischen Trägermaterial und einem Metallocen, dadurch gekennzeichnet, daß man ein anorganisches Trägermaterial in einem Lösungsmittel mit einem Metalloxen umsetzt, wobei Dicyclopentadienyl Zirconium dichlorid als Metallocen ausgeschlossen ist.

2. Verfahren nach Anspruch 1, dadurch gekennzeichnet, daß als anorganisches Trägermaterial Oxide der Metalle der II-IV Hauptgruppe, der IV. Nebengruppe des Periodensystems der Elemente oder Eisenoxide sowie deren Mischungen verwendet werden.

3. Verfahren nach Anspruch 1 oder 2, dadurch gekennzeichnet, daß als anorganisches Trägermaterial Siliciumdioxid verwendet wird.

4. Verfahren nach einem oder mehreren der Ansprüche 1-3, dadurch gekennzeichnet, daß als Metallocen eine Verbindung der Formel I 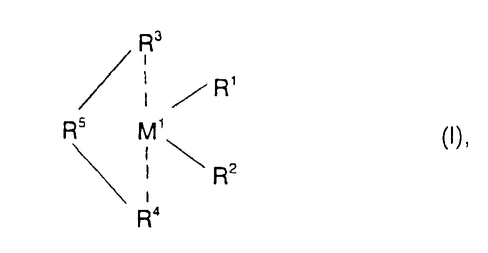 worin
M¹ Titan, Zirkon, Vanadium, Niob oder Tantal ist,
R¹ und R² gleich oder verschieden sind und ein Wasserstoffatom, ein Halogenatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe oder eine C₈-C₄₀-Arylalkenylgruppe bedeuten,
R³ und R⁴ gleich oder verschieden sind und einen ein- oder mehrkernigen Kohlenwasserstoffrest, welcher mit dem Zentralatom M¹ eine Sandwichstruktur bilden kann, bedeuten,
R⁵ 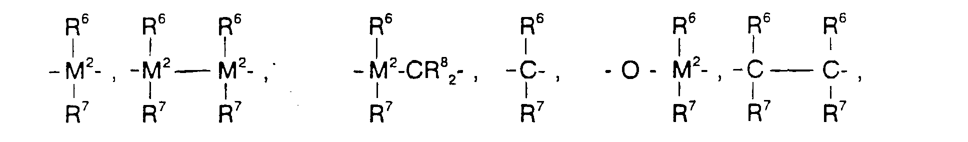 = AlR⁶, -O-, = NR⁶, = CO, = PR⁶ oder = P(O)R⁶ ist, wobei R⁶, R⁷ und R⁸ gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder R⁶ und R⁷ oder R⁶ und R⁸ jeweils mit den sie verbindenden Atomen einen Ring bilden, und
M² Silizium, Germanium oder Zinn ist, verwendet wird.

5. Verfahren nach einem oder mehreren der Ansprüche 1-4, dadurch gekennzeichnet, daß als Metallocen (Arylalkyliden)(9-fluorenyl)(cyclopentadienyl)zirkondichlorid, (Diarylmethylen)(9-fluorenyl)(cyclopentadienyl)zirkondichlorid oder (Dialkylmethylen)(9-fluorenyl)(cyclopentadienyl)zirkondichlorid verwendet wird.

6. Verfahren nach einem oder mehreren der Ansprüche 1-5, dadurch gekennzeichnet, daß als Metallocen (Methyl(phenyl)methylen)(9-fluorenyl) (cyclopentadienyl)zirkondichlorid, (Diphenylmethylen) (9-fluorenyl)(cyclopentadienyl)zirkondichlorid oder (Dimethylmethylen)(9-fluorenyl)(cyclopentadienyl)zirkondichlorid verwendet wird.

7. Verfahren nach einem oder mehreren der Ansprüche 1-6, dadurch gekennzeichnet, daß als Metallocen
rac-Dimethylsilyl-bis-(1-indenyl)zirkondichlorid,
rac-Diphenylsilyl-bis-(1-indenyl)zirkondichlorid,
rac-Dimethylsilyl-bis-(tetrahydro-1-indenyl)zirkondichlorid,
rac-Diphenylsilyl-bis-(tetrahydro-1-indenyl)zirkondichlorid,
rac-Ethylen-bis-(tetrahydro-1-indenyl)zirkondichlorid oder
rac-Ethylen-bis-(1-indenyl)zirkondichlorid verwendet wird.

8. Verfahren nach einem oder mehreren der Ansprüche 1-7, dadurch gekennzeichnet, daß als Lösungsmittel Toluol verwendet wird.

9. Verfahren zur Verstellung eines hochmolekularen Polyolefins durch Polymerisation oder Copolymerisation eines Olefins der Formel R^{a}CH = CHR^{b}, worin R^{a} und R^{b} gleich oder verschieden sind und ein Wasserstoffatom oder einen Alkylrest mit 1 bis 14 C-Atomen bedeuten, oder R^{a} und R^{b} mit den sie verbindenden Atomen einen Ring bilden können, bei einer Temperatur von -60 bis 200°C, bei einem Druck von 0,5 bis 100 bar, in Lösung, in Suspension oder in der Gasphase, in Gegenwart eines Katalysators, welcher aus einer Übergangsmetallkomponente (Metallocen) und einem Aluminoxan und/oder einer salzartigen Verbindung der Formel RₓNH_{4·x}BR'₄ oder der Formel R₃PHBR'₄, worin x = 1, 2 oder 3, R gleich oder verschieden Alkyl oder Aryl und R' = Aryl, das auch fluoriert oder teilfluoriert sein kann, besteht, dadurch gekennzeichnet, daß es sich bei der Übergangsmetallkomponente um eine geträgerte Katalysatorkomponente nach einem oder mehreren der Ansprüche 1-7 handelt.

10. Verfahren nach Anspruch 9, dadurch gekennzeichnet, daß Propylen polymerisiert oder copolymerisiert wird.

## Claims (Claims for the following Contracting State(s): AT, BE, CH, LI, DE, FR, GB, GR, IT, NL, SE)

1. A supported catalyst component for olefin polymerization, essentially comprising an inorganic support material and a metallocene, with the exception of dicyclopentadienylzirconium dichloride as the metallocene.

2. A catalyst component as claimed in claim 1, wherein the inorganic support material is an oxide of a metal from main group II-IV or sub-group IV of the Periodic Table of the Elements, or iron oxide or a mixture thereof.

3. A catalyst component as claimed in claim 1 or 2, wherein the inorganic support material is silicon dioxide.

4. A catalyst component as claimed in one or more of claims 1-3, wherein the metallocene is a compound of the formula I 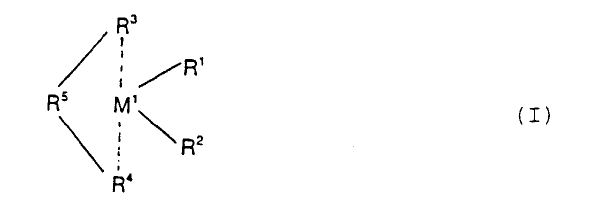 in which
M¹ is titanium, zirconium, vanadium, niobium or tantalum,
R¹ and R² are identical or different and are a hydrogen atom, a halogen atom, a C₁-C₁₀-alkyl group, a C₁-C₁₀-alkoxy group, a C₆-C₁₀-aryl group, a C₆-C₁₀-aryloxy group, a C₂-C₁₀-alkenyl group, a C₇-C₄₀-arylalkyl group, a C₇-C₄₀-alkylaryl group or a C₈-C₄₀-arylalkenyl group,
R³ and R⁴ are identical or different and are a monocyclic or polycyclic hydrocarbon radical which can form a sandwich structure with the central atom M¹,
R⁵ is 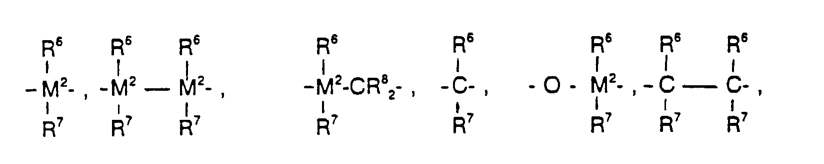 =AlR⁶, -O-, =NR⁶, =CO, =PR⁶ or =P(O)R⁶, where R⁶, R⁷ and R⁸ are identical or different and are a hydrogen atom, a halogen atom, a C₁-C₁₀-alkyl group, a C₁-C₁₀-fluoroalkyl group, a C₆-C₁₀-fluoroaryl group, a C₆-C₁₀-aryl group, a C₁-C₁₀-alkoxy group, a C₂-C₁₀-alkenyl group, a C₇-C₄₀-arylalkyl group, a C₈-C₄₀-arylalkenyl group or a C₇-C₄₀-alkylaryl group, or R⁶ and R⁷ or R⁶ and R⁸, in each case together with the atoms connecting them, form a ring, and
M² is silicon, germanium or tin.

5. A catalyst component as claimed in one or more of claims 1-4, wherein the metallocene is (arylalkylidene)-(9-fluorenyl)(cyclopentadienyl)zirconium dichloride, (diarylmethylene) (9-fluorenyl) (cyclopentadienyl)zirconium dichloride or (dialkylmethylene)(9-fluorenyl)(cyclopentadienyl)zirconium dichloride.

6. A catalyst component as claimed in one or more of claims 1-5, wherein the metallocene is (methyl(phenyl)methylene)-(9-fluorenyl)(cyclopentadienyl)-zirconium dichloride, (diphenylmethylene)-(9-fluorenyl)(cyclopentadienyl)zirconium dichloride or (dimethylmethylene)(9-fluorenyl)(cyclopentadienyl)zirconium dichloride.

7. A catalyst component as claimed in one or more of claims 1-6, wherein the metallocene is
rac-dimethylsilyl-bis-(l-indenyl)zirconium dichloride,
rac-diphenylsilyl-bis-(l-indenyl)zirconium dichloride,
rac-dimethylsilyl-bis-(tetrahydro-1-indenyl)-zirconium dichloride,
rac-diphenylsilyl-bis-(tetrahydro-l-indenyl)-zirconium dichloride,
rac-ethylene-bis-(tetrahydro-l-indenyl)zirconium dichloride or
rac-ethylene-bis-(l-indenyl)zirconium dichloride.

8. A process for the preparation of a supported catalyst component as claimed in one or more of claims 1-7, which comprises reacting the inorganic support material in a solvent with the metallocene.

9. The process as claimed in claim 8, wherein the solvent is toluene.

10. A process for the preparation of a high-molecular-weight polyolefin by polymerization or copolymerization of an olefin of the formula R^{a}CH=CHR^{b}, in which R^{a} and R^{b} are identical or different and are a hydrogen atom or an alkyl radical having 1 to 14 carbon atoms, or R^{a} and R^{b}, together with the atoms connecting them, can form a ring, at a temperature of from -60 to 200°C, at a pressure of from 0.5 to 100 bar, in solution, in suspension or in the gas phase, in the presence of a catalyst comprising a transition-metal component (metallocene) and an aluminoxane and/or a salt-like compound of the formula RₓNH₄₋ₓBR'₄ or of the formula R₃PHBR'₄ - in which x = 1, 2 or 3, R is identical or different and is alkyl or aryl, and R' = aryl, which may also be fluorinated or partially fluorinated - wherein the transition-metal component is a supported catalyst component as claimed in one or more of claims 1-7.

11. The process as claimed in claim 10, wherein propylene is polymerized or copolymerized.

## Claims (Claims for the following Contracting State(s): ES)

1. A process for the preparation of a supported catalyst component essentially comprising an inorganic support material and a metallocene, which comprises reacting an inorganic support material in a solvent with a metallocene, with the exception of dicyclopentadienylzirconium dichloride as the metallocene.

2. The process as claimed in claim 1, wherein the inorganic support material is an oxide of a metal from main group II-IV or sub-group IV of the Periodic Table of the Elements, or iron oxide or a mixture thereof.

3. The process as claimed in claim 1 or 2, wherein the inorganic support material is silicon dioxide.

4. The process as claimed in one or more of claims 1-3, wherein the metallocene is a compound of the formula I 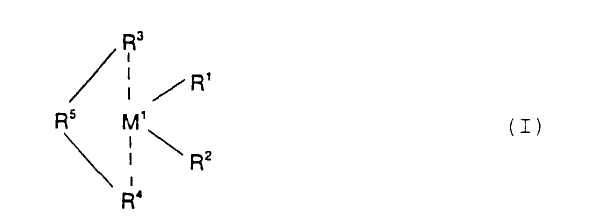 in which
M¹ is titanium, zirconium, vanadium, niobium or tantalum,
R¹ and R² are identical or different and are a hydrogen atom, a halogen atom, a C₁-C₁₀-alkyl group, a C₁-C₁₀-alkoxy group, a C₆-C₁₀-aryl group, a C₆-C₁₀-aryloxy group, a C₂-C₁₀-alkenyl group, a C₇-C₄₀-arylalkyl group, a C₇-C₄₀-alkylaryl group or a C₈-C₄₀-arylalkenyl group,
R³ and R⁴ are identical or different and are a monocyclic or polycyclic hydrocarbon radical which can form a sandwich structure with the central atom M¹,
R⁵ is 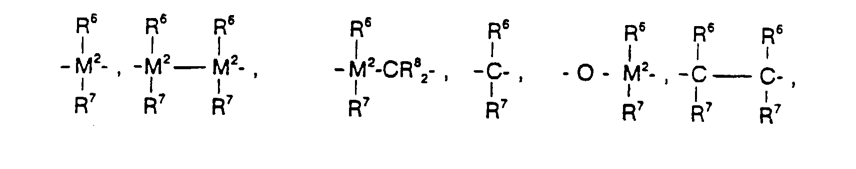 =AlR⁶, -O-, =NR⁶, =CO, =PR⁶ or =P(O)R⁶, where R⁶, R⁷ and R⁸ are identical or different and are a hydrogen atom, a halogen atom, a C₁-C₁₀-alkyl group, a C₁-C₁₀-fluoroalkyl group, a C₆-C₁₀-fluoroaryl group, a C₆-C₁₀-aryl group, a C₁-C₁₀-alkoxy group, a C₂-C₁₀-alkenyl group, a C₇-C₄₀-arylalkyl group, a C₈-C₄₀-arylalkenyl group or a C₇-C₄₀-alkylaryl group, or R⁶ and R⁷ or R⁶ and R⁸, in each case together with the atoms connecting them, form a ring, and
M² is silicon, germanium or tin.

5. The process as claimed in one or more of claims 1-4, wherein the metallocene is (arylalkylidene) (9-fluorenyl)-(cyclopentadienyl)zirconium dichloride, (diarylmethylene)(9-fluorenyl)(cyclopentadienyl)zirconium dichloride or (dialkylmethylene) (9-fluorenyl) (cyclopentadienyl)zirconium dichloride.

6. The process as claimed in one or more of claims 1-5, wherein the metallocene is (methyl(phenyl)-methylene)(9-fluorenyl)(cyclopentadienyl)zirconium dichloride, (diphenylmethylene) (9-fluorenyl) (cyclopentadienyl)zirconium dichloride or (dimethylmethylene) (9-fluorenyl) (cyclopenta-dienyl)zirconium dichloride.

7. The process as claimed in one or more of claims 1-6, wherein the metallocene is
rac-dimethylsilyl-bis-(l-indenyl)zirconium dichloride,
rac-diphenylsilyl-bis-(l-indenyl)zirconium dichloride,
rac-dimethylsilyl-bis-(tetrahydro-l-indenyl)-zirconium dichloride,
rac-diphenylsilyl-bis-(tetrahydro-l-indenyl)-zirconium dichloride,
rac-ethylene-bis-(tetrahydro-l-indenyl)zirconium dichloride or
rac-ethylene-bis-(1-indenyl)zirconium dichloride.

8. The process as claimed in one or more of claims 1-7, wherein the solvent is toluene.

9. A process for the preparation of a high-molecular-weight polyolefin by polymerization or copolymerization of an olefin of the formula R^{a}CH=CHR^{b}, in which R^{a} and R^{b} are identical or different and are a hydrogen atom or an alkyl radical having 1 to 14 carbon atoms, or R^{a} and R^{b}, together with the atoms connecting them, can form a ring, at a temperature of from -60 to 200°C, at a pressure of from 0.5 to 100 bar, in solution, in suspension or in the gas phase, in the presence of a catalyst comprising a transition-metal component (metallocene) and an aluminoxane and/or a salt-like compound of the formula RₓNH₄₋ₓBR'₄ or of the formula R₃PHBR'₄ - in which x = 1, 2 or 3, R is identical or different and is alkyl or aryl, and R' = aryl, which may also be fluorinated or partially fluorinated - wherein the transition-metal component is a supported catalyst component as claimed in one or more of claims 1-7.

10. The process as claimed in claim 9, wherein propylene is polymerized or copolymerized.

## Revendications (Revendications pour l'(les) Etat(s) contractant(s) suivant(s): AT, BE, CH, LI, DE, FR, GB, GR, IT, NL, SE)

1. Composant de catalyseur sur support pour une polymérisation d'oléfine, essentiellement constitué d'une matière de support inorganique et d'un métallocène, dans lequel du dichlorure de dicyclopentadiényl-zirconium est exclu comme métallocène.

2. Composant de catalyseur suivant la revendication 1, caractérisé en ce que, comme matière de support inorganique, on utilise des oxydes des métaux du groupe principal II-IV, du groupe secondaire IV du système périodique des éléments ou des oxydes de fer ainsi que leurs mélanges.

3. Composant de catalyseur suivant l'une des revendications 1 et 2, caractérisé en ce que, comme matière de support inorganique, on utilise du dioxyde de silicium.

4. Composant de catalyseur suivant une ou plusieurs des revendications 1 à 3, caractérisé en ce que, comme métallocène, on utilise un composé de la formule I : 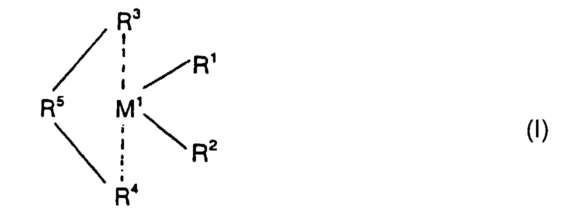 dans laquelle
M¹ est du titane, du zirconium, du vanadium, du niobium ou du tantale,
R¹ et R² sont identiques ou différents et représentent un atome d'hydrogène, un atome d'halogène, un groupe alkyle en C₁-C₁₀, un groupe alcoxy en C₁-C₁₀, un groupe aryle en C₆-C₁₀, un groupe aryloxy en C₆-C₁₀, un groupe alcényle en C₂-C₁₀, un groupe arylalkyle en C₇-C₄₀, un groupe alkylaryle en C₇-C₄₀ ou un groupe arylalcényle en C₈-C₄₀,
R³ et R⁴ sont identiques ou différents et représentent un radical hydrocarbure à un ou plusieurs noyaux, qui peut former avec l'atome central M¹ une structure sandwich,
R⁵ représente 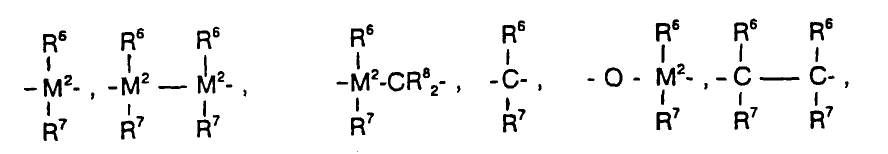 = AlR⁶, -O-, = NR⁶, = CO, = PR⁶ ou = P(OR)R⁶, où R⁶, R⁷ et R⁸ sont identiques ou différents et représentent un atome d'hydrogène, un atome d'halogène, un groupe alkyle en C₁-C₁₀, un groupe fluoroalkyle en C₁-C₁₀, un groupe fluoroaryle en C₆-C₁₀, un groupe aryle en C₆-C₁₀, un groupe alcoxy en C₁-C₁₀, un groupe alcényle en C₂-C₁₀, un groupe arylalkyle en C₇-C₄₀, un groupe arylalcényle en C₈-C₄₀ ou un groupe alkylaryle en C₇-C₄₀, R⁶ et R⁷ ou R⁶ et R⁸ pouvant former chacun un noyau avec les atomes qui les relient, et
M² est du silicium, du germanium ou de l'étain.

5. Composant de catalyseur suivant une ou plusieurs des revendications 1 à 4, caractérisé en ce que, comme métallocène, on utilise du dichlorure de (arylalkylidène)(9-fluorényl)(cyclopentadiényl)-zirconium, du dichlorure de (diarylméthylène)(9-fluorényl)(cyclopentadiényl)-zirconium ou du dichlorure de (dialkylméthylène)(9-fluorényl)(cyclopentadiényl)-zirconium.

6. Composant de catalyseur suivant une ou plusieurs des revendications 1 à 5, caractérisé en ce que, comme métallocène, on utilise du dichlorure de (méthyl(phényl)méthylène)(9-fluorényl)(cyclopentadiényl)-zirconium, du dichlorure de (diphénylméthylène)(9-fluorényl)(cyclopentadiényl)-zirconium ou du dichlorure de (diméthylméthylène)(9-fluorényl)(cyclopentadiényl)-zirconium.

7. Composant de catalyseur suivant une ou plusieurs des revendications 1 à 6, caractérisé en ce que, comme métallocène, on utilise du dichlorure de rac-diméthylsilyl-bis-(1-indényl)zirconium, du dichlorure de rac-diphénylsilyl-bis-(1-indényl)zirconium, du dichlorure de rac-diméthylsilyl-bis-(tétrahydro-1-indényl)zirconium, du dichlorure de racdiphénylsilyl-bis-(tétrahydro-1-indényl)zirconium, du dichlorure de racéthylène-bis-(tétrahydro-1-indényl)zirconium ou du dichlorure de rac-éthylène-bis-(1-indényl)zirconium.

8. Procédé de préparation d'un composant de catalyseur sur support suivant une ou plusieurs des revendications 1 à 7, caractérisé en ce qu'on fait réagir la matière de support inorganique dans un solvant avec le métallocène.

9. Procédé suivant la revendication 8, caractérisé en ce que, comme solvant, on utilise du toluène.

10. Procédé de préparation d'une polyoléfine de poids moléculaire élevé par polymérisation ou copolymérisation d'une oléfine de la formule R^{a}CH=CHR^{b}, dans laquelle R^{a} et R^{b} sont identiques ou différents et représentent un atome d'hydrogène ou un radical alkyle comportant 1 à 14 atomes de C, R^{a} et R^{b} pouvant former un noyau avec les atomes qui les relient, à une température de -60 à 200°C, à une pression de 0,5 à 100 bars, en solution, en suspension ou dans la phase gazeuse, en présence d'un catalyseur qui est constitué d'un composant de métal de transition (métallocène) et d'un aluminoxane et/ou d'un composé de type sel de la formule RₓNH₄₋ₓBR'₄ ou de la formule R₃PHBR'₄, où x = 1, 2 ou 3, les R sont des alkyles ou aryles identiques ou différents et R' = aryle qui peut être également fluoré ou partiellement fluoré, caractérisé en ce que, en ce qui concerne le composant de métal de transition, il s'agit d'un composant de catalyseur sur support suivant une ou plusieurs des revendications 1 à 7.

11. Procédé suivant la revendication 10, caractérisé en ce que du propylène est polymérisé ou copolymérisé.

## Revendications (Revendications pour l'(les) Etat(s) contractant(s) suivant(s): ES)

1. Procédé de préparation d'un composant de catalyseur sur support, constitué essentiellement constitué d'une matière de support inorganique et d'un métallocène, caractérisé en ce qu'on fait réagir une matière de support inorganique dans un solvant avec un métallocène, du dichlorure de dicyclopentadiényl-zirconium étant exclu comme métallocène.

2. Procédé suivant la revendication 1, caractérisé en ce que, comme matière de support inorganique, on utilise des oxydes des métaux du groupe principal Il-IV, du groupe secondaire IV du système périodique des éléments ou des oxydes de fer ainsi que leurs mélanges.

3. Procédé suivant l'une des revendications 1 et 2, caractérisé en ce que, comme matière de support inorganique, on utilise du dioxyde de silicium.

4. Procédé suivant une ou plusieurs des revendications 1 à 3, caractérisé en ce que, comme métallocène, on utilise un composé de la formule I : 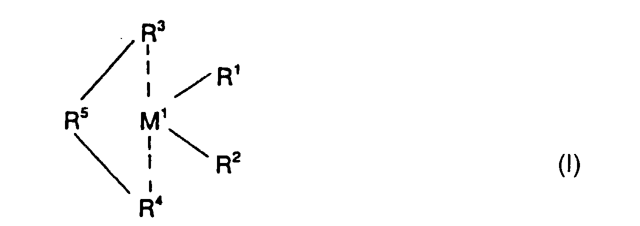 dans laquelle
M¹ est du titane, du zirconium, du vanadium, du niobium ou du tantale,
R¹ et R² sont identiques ou différents et représentent un atome d'hydrogène, un atome d'halogène, un groupe alkyle en C₁-C₁₀, un groupe alcoxy en C₁-C₁₀, un groupe aryle en C₆-C₁₀, un groupe aryloxy en C₆-C₁₀, un groupe alcényle en C₂-C₁₀, un groupe arylalkyle en C₇-C₄₀, un groupe alkylaryle en C₇-C₄₀ ou un groupe arylalcényle en C₈-C₄₀,
R³ et R⁴ sont identiques ou différents et représentent un radical hydrocarbure à un ou plusieurs noyaux, qui peut former avec l'atome central M¹ une structure sandwich,
R⁵ représente 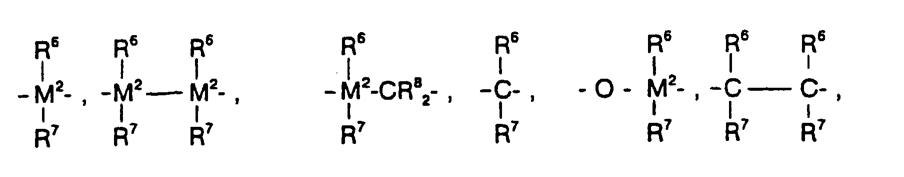 = AlR⁶, -O-, = NR⁶, = CO, = PR⁶ ou = P(OR)R⁶, où R⁶, R⁷ et R⁸ sont identiques ou différents et représentent un atome d'hydrogène, un atome d'halogène, un groupe alkyle en C₁-C₁₀, un groupe fluoroalkyle en C₁-C₁₀, un groupe fluoroaryle en C₆-C₁₀, un groupe aryle en C₆-C₁₀, un groupe alcoxy en C₁-C₁₀, un groupe alcényle en C₂-C₁₀, un groupe arylalkyle en C₇-C₄₀, un groupe arylalcényle en C₈-C₄₀ ou un groupe alkylaryle en C₇-C₄₀, R⁶ et R⁷ ou R⁶ et R⁸ pouvant former chacun un noyau avec les atomes qui les relient, et
M² est du silicium, du germanium ou de l'étain.

5. Procédé suivant une ou plusieurs des revendications 1 à 4, caractérisé en ce que, comme métallocène, on utilise du dichlorure de (arylalkylidène)(9-fluorényl)(cyclopentadiényl)-zirconium, du dichlorure de (diarylméthylène)(9-fluorényl)(cyclopentadiényl)-zirconium ou du dichlorure de (dialkylméthylène)(9-fluorényl)(cyclopentadiényl)-zirconium.

6. Procédé suivant une ou plusieurs des revendications 1 à 5, caractérisé en ce que, comme métallocène, on utilise du dichlorure de (méthyl(phényl)méthylène)(9-fluorényl)(cyclopentadiényl)-zirconium, du dichlorure de (diphénylméthylène)(9-fluorényl)(cyclopentadiényl)-zirconium ou du dichlorure de (diméthylméthylène)(9-fluorényl)(cyclopentadiényl)-zirconium.

7. Procédé suivant une ou plusieurs des revendications 1 à 6, caractérisé en ce que, comme métallocène, on utilise du dichlorure de rac-diméthylsilyl-bis-(1-indényl)zirconium, du dichlorure de rac-diphénylsilyl-bis-(1-indényl)zirconium, du dichlorure de rac-diméthylsilyl-bis-(tétrahydro-1-indényl)zirconium, du dichlorure de rac-diphénylsilyl-bis-(tétrahydro-1-indényl)zirconium, du dichlorure de rac-éthylène-bis-(tétrahydro-1-indényl)zirconium ou du dichlorure de rac-éthylène-bis-(1-indényl)-zirconium.

8. Procédé suivant une ou plusieurs des revendications 1 à 7, caractérisé en ce que, comme solvant, on utilise du toluène.

9. Procédé de préparation d'une polyoléfine de poids moléculaire élevé par polymérisation ou copolymérisation d'une oléfine de la formule R^{a}CH=CHR^{b}, dans laquelle R^{a} et R^{b} sont identiques ou différents et représentent un atome d'hydrogène ou un radical alkyle comportant 1 à 14 atomes de C, R^{a} et R^{b} pouvant former un noyau avec les atomes qui les relient, à une température de -60 à 200°C, à une pression de 0,5 à 100 bars, en solution, en suspension ou dans la phase gazeuse, en présence d'un catalyseur qui est constitué d'un composant de métal de transition (métallocène) et d'un aluminoxane et/ou d'un composé de type sel de la formule RₓNH₄₋ₓBR'₄ ou de la formule R₃PHBR'₄, où x = 1, 2 ou 3, les R sont des alkyles ou aryles identiques ou différents et R' = aryle qui peut être également fluoré ou partiellement fluoré, caractérisé en ce que, en ce qui concerne le composant de métal de transition, il s'agit d'un composant de catalyseur sur support suivant une ou plusieurs des revendications 1 à 7.

10. Procédé suivant la revendication 9, caractérisé en ce que du propylène est polymérisé ou copolymérisé.
